# EUROPÄISCHE PATENTSCHRIFT

(11) **EP 3 158 327 B1**
(45) Veröffentlichungstag und Bekanntmachung des Hinweises auf die Patenterteilung: **31.01.2018**
(21) Anmeldenummer: 15732568.9
(22) Anmeldetag: 17.06.2015
(51) Int. Cl.: G01N 23/20, H01M 10/48

(54) **BATTERIETRÄGER ZUR IN SITU ANALYSE**
BATTERY CARRIER FOR IN SITU ANALYSIS
SUPPORT DE BATTERIE POUR UNE ANALYSE IN SITU

(30) Priorität: 20.06.2014 DE 102014211901
(43) Veröffentlichungstag der Anmeldung: 26.04.2017
(73) Patentinhaber: Leibniz-institut Für Festkörper- Und Werkstofffors, 01069 Dresden (DE); Karlsruher Institut für Technologie, 76131 Karlsruhe (DE)
(72) Erfinder: HERKLOTZ, Markus, 01309 Dresden (DE); WEISS, Jonas, 01159 Dresden (DE); GIEBELER, Lars, 01159 Dresden (DE); KNAPP, Michael, 76186 Karlsruhe (DE)
(74) Vertreter: Kailuweit & Uhlemann Patentanwälte Partnerschaft mbB
(86) Internationale Anmeldenummer: PCT/EP2015/063638
(87) Internationale Veröffentlichungsnummer: WO 2015/193393

(56) Entgegenhaltungen:
- EP-A1- 2 495 748
- US-A1- 2014 093 052
- MARKUS HERKLOTZ ET AL: "Advances in in situ powder diffraction of battery materials: a case study of the new beamline P02.1 at DESY, Hamburg", JOURNAL OF APPLIED CRYSTALLOGRAPHY, Bd. 133, Nr. 4, August 2013 (2013-08), Seiten 4404-1127, XP055212001, ISSN: 0021-8898, DOI: 10.1107/S0021889813013551 in der Anmeldung erwähnt

## Beschreibung

Gegenstand der vorliegenden Erfindung ist eine Vorrichtung, die es gestattet Batterien, insbesondere Batterieknopfzellen, in einen Röntgenstrahl, Synchrotronstrahl oder anderen Sondenstrahl einzubringen, um an diesen Batterien während des Ladens bzw. Entladens diffraktometrische oder spektroskopische Untersuchung durchzuführen.

Im Rahmen der Entwicklung von hochleistungsfähigen Batterien, insbesondere von Akkumulatoren, ist es von besonders großem Interesse, die strukturchemischen Vorgänge, die während des Ladens und Entladens des Batteriesystems auftreten, zu untersuchen. Derartige Untersuchungen werden als *in situ* Untersuchungen bezeichnet. Insbesondere bedeutet *in situ* in diesem Zusammenhang: die quantitative Untersuchung der kristallinen Struktur, der Elektrodenmorphologie oder der Oberflächenchemie aller beteiligten Komponenten, während die Batterie kontinuierlich (d.h. ohne Unterbrechung der Stromversorgung) geladen und entladen wird.

Besonders nutzbringend und weit verbreitet sind Untersuchungen mittels Röntgen- bzw. Synchrotronstrahlung, da deren Wellenlänge im Skalenbereich der atomaren Struktur liegt. Dies erlaubt eine quantitative Untersuchung strukturchemischer Phänomene und eine detaillierte Beschreibung, beispielsweise von Phasenanteilen, Gitterparameter oder Atompositionen in Abhängigkeit vom Ladezustand des Batteriematerials. Synchrotronstrahlung bietet extreme zeitliche und instrumentelle Auflösungen und kommt daher am häufigsten zum Einsatz. Die Gehäuse der zu untersuchenden Batterien weisen für die Untersuchung meist Öffnungen zum Strahlein- bzw. Strahlaustritt auf. Diese Öffnungen können auch mit Materialien abgedeckt sein, die mit der verwendeten Strahlung nur geringfügig interagieren.

Als Methoden kommen dabei insbesondere die Durchstrahlungs- und die Reflexionsdiffraktometrie zum Einsatz. Verstärkt werden auch die sogenannten *in situ* PDF (engl. pair distribution function, deutsch: Paar-Verteilungsfunktion)- Methoden oder die Fluoreszenzanalyse, insbesondere die Absorptionsspektroskopie, durchgeführt.

Während bei der Durchstrahlungsdiffraktometrie und der Absorptionsspektroskopie das hinter dem zu untersuchenden Gegenstand entstehende Beugungs- bzw. Absorptionsmuster analysiert wird, handelt es sich bei der Reflexionsdiffraktometrie um ein Verfahren, bei dem sowohl Strahlungsquelle als auch Detektor oberhalb derselben Oberfläche angeordnet sind. Die Strahldurchmesser der Röntgen- oder Synchrotronstrahlung betragen im Allgemeinen weniger als 3 mm und liegen meist sogar darunter (ca. 1 mm).

Meist ist die Strahlzeit, also die Zeit, die für diffraktometrische Messungen zur Verfügung steht, gering und, insbesondere bei Einsatz von Synchrotronstrahlung, auch besonders teuer. Die zur Verfügung stehende Zeit soll daher effektiv genutzt werden. Es wird daher angestrebt, möglichst wenig Zeit zur Platzierung und Justierung der Probe (Batterie) im Strahlengang aufzuwenden und möglichst viele Proben gleichzeitig (d.h. sequenziell) zu messen. Für diesen Zweck wurden spezielle Probenhalterungen entwickelt.

Die US 5,127,039 beschreibt einen Probenhalter für die Röntgendiffraktometrie. Besonderes Kennzeichen dieser Entwicklung ist die Justierbarkeit in jede Raumrichtung. Die Vorrichtung soll auch einen Probenhalter aufweisen. Dieser ist drehbar gestaltet, so dass er während der Bestrahlung rotieren kann. Es ist jedoch nicht vorgesehen, mehrere Proben einzusetzen. Die Rotationsbewegung bezieht sich hier nur auf eine einzelne Probe, auch wenn von einer "sample disc" (Sp. 3, Z. 1-8) gesprochen wird. Die Rotationsachse des Probenhalters steht dabei senkrecht zur Strahlachse und schneidet diese. Eine Umrüstung zur Messung der nächsten Probe ist hier jedoch immer noch zeitaufwendig.

Gegenstand der US 2014/0106216 A1 ist ein Verfahren, Lagen, aus denen eine Lithium-Ionen-Batterie aufgebaut wird, während der Herstellung einer lokalen Hitzebehandlung zu unterziehen. Während des Herstellungsprozesses finden Sputtervorgänge statt, für die der Einsatz eines Probenhalterkarussells vorgeschlagen wird. Eine direkte Übertragbarkeit auf die diffraktometrische Untersuchung ist nicht gegeben.

Die US 2014/0093052 A1 schlägt eine Testkammer für Röntgenstrahlungs- oder Neutronenspektroskopie an Batterien und Brennstoffzellen vor. Die Untersuchungsobjekte bringen hier keine eigenen Gehäuse mit, sondern werden in den Probenkammern der Testkammer aufgebaut. Die Testkammer ist als zweiteiliges Gehäuse mit einem Ober- und einem Unterteil ausgeführt. Die Kontaktierung der Zellen erfolgt über Durchführungen, durch die Kontaktleitungen zur Batteriewandung bzw. dem Deckel der Batterie führen. Nachteilig an dieser Konstruktion ist, dass die Kontaktierung der Batterie über Leitungen erfolgt, die eine sichere Kontaktherstellung nicht gewährleisten können. Insbesondere ist so die Testkammer nur für eine einzige Batteriegröße geeignet.

Die US 7,022,290 B2 beschreibt eine hermetisch abgeschlossene Untersuchungskammer für Batterien. Die Untersuchungskammer besteht aus einem Grundkörper mit Einsatzöffnung für die Batterie und einem Deckel, der eine Öffnung für den Strahleintritt aufweist. Diese Konstruktion ist ausschließlich für Rückstrahlungsuntersuchungen geeignet, da keine Möglichkeit besteht, einen durch die Batterie hindurchtretenden Strahl zu detektieren, da es keine geeignete Austrittsöffnung gibt.

In der WO 96/22523 wird eine Vorrichtung zur Untersuchung von Batterien mittels Röntgenstrahlung vorgeschlagen. Die Vorrichtung besteht aus einem Ober- und einem Unterteil, die elektrisch voneinander isoliert sind. Die Kontaktierung der Batterie erfolgt über Anschlüsse an diesem Ober- bzw. Unterteil, während die Batterie zwischen diesen Teilen eingeklemmt ist. Die Unterseite der Batterie wird durch einen Kupferblock kontaktiert, während die Oberseite über ein Fenster der Strahlung ausgesetzt wird. Diese Vorrichtung ist ebenfalls nicht für Durchstrahlungsuntersuchungen geeignet, da der Kupferblock die Messergebnisse verfälschen würde.

In der JP 2012-159311 A wird eine Vorrichtung beschrieben, die dazu bestimmt ist, die einzelnen Lagen einer Batterie aufzunehmen und der Untersuchung zugänglich zu machen. Dabei werden die Lagen der Batterie zwischen zwei Gegenstücke geklemmt, die Fenster zum Strahlein- bzw. austritt aufweisen. Bei dieser Vorrichtung handelt es sich um eine Lösung zur Handhabung einer einzelnen Zelle. Die Positionierung im Strahl erfolgt über einen speziellen Halter zur Aufnahme der Vorrichtung. Ein schneller Probenwechsel und eine sichere Spannungszufuhr sind so nicht gewährleistet.

Gegenstand der JP 10-054809 A ist eine Vorrichtung aus Ober- und Unterteil, die elektrisch isoliert gegeneinander sind. Zwischen diese Teile wird der Schichtstapel einer Batterie mit Elektrolyt eingeklemmt. Die Kontaktierung erfolgt über Ober- bzw. Unterteil. Die beiden Teile weisen Fenster zum Strahldurchtritt auf. Die Vorrichtung ist nicht geeignet, vorgefertigte Batteriekörper aufzunehmen und diese einer schnellen Messung zuzuführen. Vielmehr ist die Vorrichtung selbst als Batteriegehäuse für experimentelle Schichtungen und Elektrolyte von Batterien anzusehen.

Die Firma Anton Paar (http://www.anton-paar.com/?eID=documentsDownload&document= 2065&L=8, Stand Webseite: 18. Juni 2014) schlägt einen Probenträger vor, der ein Probenrad aufweist. Dieses soll sich in einer Mikroklimakammer befinden und es besteht die Möglichkeit, eine von acht Proben in einen Röntgenstrahl zu bewegen. Vorgesehen ist eine Durchstrahlung der Probe. Das Probenrad ist im Wesentlichen waagerecht ausgerichtet. Die Probenträger sind nicht verschließbar, so dass eine Änderung der Lage des Probenrades nicht ohne weiteres möglich ist. Darüber hinaus sind keinerlei individuelle Zuführungen von Medien oder elektrischer Energie zu den einzelnen Proben vorgesehen. *In situ* Batterieuntersuchungen sind damit nicht durchführbar.

In dem Artikel "Advances in in situ powder diffraction of battery materials: a case study of the new beamline P02.1 at DESY, Hamburg", M. Herklotz et al. Journal of Applied Crystallography, (2013). 46. P. 1117-1127 wird ein Probenträger gezeigt, der vier Batteriehalter aufweist, die um den Mittelpunkt des kreisförmigen Probenträgers angeordnet sind. Der Probenträger ist auch um diesen Mittelpunkt drehbar ausgeführt. Jeder der Batteriehalter kann elektrisch angeschlossen werden, so dass *in situ* Messungen möglich sind. Problematisch ist, dass die Stromversorgung über mehrere Kabel (2 je Batterie) erfolgt, die in undefinierter Weise von der primärstrahlzugewandten Seite des Probenträgers weg führen. Hier kann es dazu kommen, dass während des Messprozesses oder bei einer Drehung des Probenträgers Kabel in den Strahlengang gelangen und zu einer Verfälschung der Messergebnisse führen. Weiterhin ist der Probenwechsel durch die Fixierung der Probenabdeckung mittels Schrauben aufwendig, zeitraubend und fehleranfällig

Es stellt sich somit die Aufgabe, eine Vorrichtung als Probenträger vorzuschlagen, die sowohl für Durchstrahlungs- als auch für Reflexionsmessungen mittels Röntgenstrahlen oder Synchrotronstrahlen geeignet ist, insbesondere *In situ* Messungen ermöglicht und handhabungssicher eine störungsfreie Medienzuleitung zu den zu untersuchenden Batterien ermöglicht.

Erfindungsgemäß wird die Aufgabe mittels eines Probenträgers nach Anspruch 1 gelöst. Vorteilhafte Ausführungsformen sind in den rückbezogenen Unteransprüchen offenbart.

Der erfindungsgemäße Probenträger ist als Batterieträger zur *in situ* Analyse von Batterien mittels Röntgen- bzw. Synchrotrondiffraktometrie ausgeführt. Er weist ein, um seinem Mittelpunkt drehbar gelagertes Probenrad auf. Das Probenrad ist bevorzugt an seinem Außenrand, vorzugsweise über Kugellager, gelagert. Eine alternative Ausführungsform sieht den Einsatz einer im Mittelpunkt des Probenrades angreifenden Achse vor, die entsprechend gelagert ist. Um den Mittelpunkt des Probenrades herum, bevorzugt auf einem Kreisring und vorzugsweise äquidistant zueinander, sind mehrere Probenhalter angeordnet, wobei jeder Probenhalter einzeln mit einem arretierbaren Deckel wiederholt geöffnet und verschlossen werden kann. Der Probenhalter weist in seinem Inneren einen Hohlraum (Vertiefung mit Deckel) auf, der die zu untersuchende Batterie im Umfang formideal aufnimmt. Deckel und Vertiefung weisen eine unverschlossene oder abgedeckte Öffnung für den Strahldurchtritt und eine im Randbereich der Unterseite der Batterie angreifende Feder auf. Die Feder presst die Batterie gegen den Deckel, der so den Randbereich der Oberseite der Batterie elektrisch kontaktiert. Feder und zumindest der Randbereich des Deckels sind elektrisch leitend, jedoch isoliert gegeneinander. Erfindungswesentlich ist von jedem Probenträger eine elektrisch leitfähige Verbindung vom Randbereich des Deckels und eine elektrisch leitfähige Verbindung von der Feder in die Nähe des Mittelpunktes des Probenrades (Mittelachse) geführt. Deckel und Feder kontaktieren dabei jeweils einen anderen der beiden Pole (elektrochemisch positive und negative Elektrode) der zu untersuchenden Batterie. Die Leitungen aller Probenträger werden in der Nähe des Mittelpunktes vorteilhaft zu einem Leitungsbündel zusammengefasst.

Der Probenträger ist bevorzugt als radartige Konstruktion ausgeführt. Er weist dabei eine kreisförmige Grundfläche mit einer Mittelachse auf. Der Probenträger ist um diese Mittelachse drehbar. Von der Mittelachse und in identischem Abstand ihrer Mittelpunkte zu dieser sind mehrere Probenhalter angeordnet. Die Probenhalter sind vorzugsweise in gleichem Abstand zueinander auf dem Kreisring, den sie aufgrund ihres identischen Abstandes von der Mittelachse ausbilden, angeordnet. Bei entsprechender Steuerung der Bewegung des Probenrades sind jedoch auch variierende Abstände zwischen den Probenhaltern möglich. Bevorzugt weisen die Probenhalter identische Durchmesser auf. Weiterhin bevorzugt sind jedoch auch Probenhalter unterschiedlicher Durchmesser möglich. Dabei ist es jedoch wesentlich, dass die geometrischen Mittelpunkte der Probenhalter alle auf einer gemeinsamen Kreislinie um den Mittelpunkt des Probenträgers angeordnet sind (die Angaben beziehen sich auf die Vorderseite des Probenträgers). Auf dem Probenträger sind vorzugsweise, zwei, drei, vier, sechs oder acht Probenhalter angeordnet. Prinzipiell ist jede sinnvolle Zahl von Probenhaltern möglich. Diese wird durch die einzuhaltenden Abmessungen (abhängig von der Röntgen- oder Synchrotronvorrichtung) und die Messaufgaben begrenzt.

Der Probenträger ist vorzugsweise aus Kunststoff, faserverstärktem Kunststoff oder anderen, nicht leitenden steifen Materialien, hergestellt. Als Hinterseite des Probenträgers wird im Folgenden die im Falle der Transmission dem Primärstrahl zugewandte Seite (also die Seite, die zuerst vom Strahl durchdrungen wird) und als Vorderseite die dem Strahl abgewandte Seite (also im Beugungsbereich) bezeichnet.

Die Mittelachse ist in einer ersten bevorzugten Ausführungsform parallel zur Achse des Röntgenstrahles (Strahlachse) ausgerichtet. Diese Ausführungsform ist besonders für Durchstrahlungsmessungen (Transmissionsdiffraktometrie) geeignet.

In einer weiteren bevorzugten Ausführungsform steht die Mittelachse derart in einem spitzen Winkel zur Strahlachse, dass die Vorderseite des Probenträgers, also die Seite auf der die Deckel (siehe weiter unten) die Probenhalter abschließen, dem einfallenden Strahl zugewandt ist. Diese Ausführungsform wird insbesondere bei Röntgen-Reflexionsdiffraktometrie oder der Röntgenfluoreszenzanalyse eingesetzt.

Der Probenträger ist bevorzugt mit einem Antrieb versehen, der die Positionierung jeweils eines Probenhalters in den Strahlengang durch Drehung des Probenträgers um die Mittelachse realisiert. Bevorzugt handelt es sich bei dem Antrieb um einen elektrischen Schrittmotor. In einer besonders einfachen Ausführungsform erfolgt die Drehung manuell in Strahlpausen.

Die Probenhalter sind bevorzugt als Vertiefungen in dem Probenträger ausgeführt. Sie weisen eine Form auf, die der zu untersuchenden Batterie angepasst ist. Entsprechend der Mehrzahl der Batterien ist die Form bevorzugt kreisförmig. Die Vertiefung wird durch einen (vorzugsweise kreisförmigen) Deckel verschlossen, der lösbar und in Verschlussposition arretierbar ist. Vorzugsweise verengt sich die Vertiefung unterhalb Ihrer Oberkante geringfügig, so dass ein Absatz entsteht, auf dem der Deckel aufliegen und wo er durch Nasen oder Schrauben in seiner Position gehalten werde kann. In einer bevorzugten Ausführungsform handelt es sich um eine einfache Verschränkung des Deckels mit Nasen, die am Rand der Vertiefung angeordnet sind. Der Deckel weist korrespondierende Aussparungen auf, so dass er an den Nasen vorbei in die Vertiefung hinein geführt und durch eine Verdrehung hinter den Nasen arretiert werden kann. Die Nasen können auch durch die Köpfe von Schrauben gebildet werden, die um die Vertiefung herum angeordnet sind. Weiterhin ist es möglich, auf die Nasen und die Aussparungen zu verzichten und den Deckel vollständig durch Schraubenköpfe in seiner Position zu fixieren. Dies erlaubt jedoch nicht, den Deckel so schnell zu öffnen, wie dies bei einer Verschränkung der Fall wäre.

Die flache Bauweise des Halters und des Deckels erlauben vorteilhaft einen maximalen Beugungswinkel von mindestens 70° (am Beispiel Transmission bei Primärstrahlführung parallel zur Rotationsachse, Angabe in 2θ). Dies erhöht den Anwendungsbereich in Transmissions- und Reflexionsanordnung. Beispielweise können sogenannte PDF (englisch: pair distribution function)-Methoden durchgeführt werden, welche detaillierte Kenntnisse über die atomare Nahordnung liefern, jedoch einen hohen Beugungswinkel voraussetzen.

Der Deckel weist eine vorzugsweise mittige Öffnung zum Strahleintritt auf. In einer bevorzugten Ausführungsform ist die Öffnung mit einem, den Röntgenstrahl geringfügig beeinflussenden Material (bspw. Kapton) abgedeckt bzw. ausgefüllt. Der Deckel ist bevorzugt aus leitfähigem Material gefertigt oder mit einem solchen beschichtet. Auf diese Weise wird eine elektrisch leitfähige Verbindung zur Oberseite der Batterie (Beugungsbereich) hergestellt.

In der Vertiefung ist eine Feder angeordnet, die die zu untersuchende Batterie in Richtung des Deckels drückt. Bevorzugt handelt es sich um eine Schraubenfeder, die an der Batterie an oder in der Nähe des äußeren Randes angreift. Auf diese Weise kann der Strahl bei Durchgangsmessungen die Feder in ihrem Inneren passieren, ohne dass ein verfälschender Einfluss auf das Messergebnis durch das Federmaterial ausgeübt würde. Die Schraubenfeder ist bevorzugt aus leitfähigem Material gefertigt, mit solchem beschichtet oder ist davon so durchzogen, dass eine elektrisch leitfähige Verbindung vom Boden der Batterie zum Boden der Vertiefung des Probenhalters oder der Kontaktfläche einer Leiterplatte erreicht wird.

Die Feder stützt sich in einer bevorzugten Ausführungsform am Boden der Vertiefung des Probenhalters ab. Der Boden weist vorzugsweise ebenfalls eine Öffnung auf, die dem Strahleintritt dient. Auch diese Öffnung kann mit geeignetem Material verschlossen oder ausgefüllt sein.

Der Innendurchmesser der Feder sowie die Öffnungen im Boden und im Deckel der Vertiefung sind so gewählt, dass sie den Strahldurchmesser übersteigen, um keine bzw. eine minimierte Wechselwirkung mit dem Strahl zu verursachen.

Durch die Feder ist es vorteilhaft möglich, Batterien mit unterschiedlichen Bauhöhen und gleichen Außendurchmessern in die Probenhalter einzusetzen. Beispielsweise kann problemlos zwischen Zellen der Bauformen CR2032, CR2025 oder CR2016 gewechselt werden.

Auch kleinere Durchmesser, als die für die genannten Zellen typischen 2 cm, sind möglich. Eine bevorzugte Ausführungsform weist dazu einen Adapter auf, der als Ring um eine Batterie mit einem kleineren Durchmesser, als die Vertiefung des Probenhalters hat, herumgelegt wird und so eine Vermessung von Batterien kleinerer Durchmesser ermöglicht. Zu beachten ist dabei der Durchmesser der Spiralfeder. Noch kleinere Batteriedurchmesser benötigen dann eine Unterlegscheibe, die ein Abrutschen der Batterie in die Spiralfeder zuverlässig verhindern kann.

Durch die elektrisch leitfähige Gestaltung des Deckels wird die Oberseite der Batterie kontaktiert. Ausgehend vom Deckel wird eine weitere leitfähige Verbindung hergestellt. Diese führt bevorzugt als Kabel zur Vorderseite und von dort zur Rückseite des Probenträgers. In Ausführungsformen, in denen der Deckel durch Schraubenköpfe gehalten wird, kann auch mindestens eine der Schrauben aus Metall bestehen und bis zur Rückseite des Probenträgers reichen. Bei Ausführungsformen, die an den Rändern der Vertiefungen Nasen aufweisen, ist mindestens eine Nase elektrisch leitfähig und mit einer Durchkontaktierung (Schraube oder Kabel) durch den Probenträger bis zu dessen Rückseite verbunden.

Der Boden des Probenhalters ist bevorzugt ebenfalls leitfähig oder in bestimmten lokalen Bereichen leitfähig, so dass eine elektrisch leitende Verbindung zur Spiralfeder hergestellt werden kann. Vom Boden des Probenhalters führt eine elektrisch leitfähige Verbindung zur Rückseite des Probenträgers. Bevorzugt erfolgt dies durch eine elektrisch leitende Schraube oder eine Leitung.

In einer besonders bevorzugten Ausführungsform für Probenträger aus nichtleitendem Material tritt die Schraubenfeder durch die Strahleintrittssöffnung im Boden des Probenhalters hindurch und stützt sich auf der dahinter liegenden Leiterplatte ab, wo sie gleichzeitig die leitende Verbindung zur Batterierückseite realisiert.

Auf der Rückseite des Probenträgers liegen Kontakte für die beiden Pole der Batterie jedes einzelnen Probenhalters an (von der Vorderseite der Batterie bspw. über Deckel, Schraube und Kabel, von der Rückseite der Batterie bspw. über Schraubenfeder und Boden der Vertiefung oder direkt über die Schraubenfeder). Zu beachten ist bei dieser Betrachtungsweise, dass die Vorderseite der Batterie der Vorderseite des Probenträgers zugewandt ist.

Erfindungsgemäß ist nunmehr vorgesehen, die Kontakte an oder bei der Mittelachse des Probenträgers zusammen zu führen und von dort aus definiert zur Stromversorgung und/oder zu den Messgeräten (z.B. Potentiostaten) zu leiten. Bevorzugt erfolgt dies, indem auf der Rückseite des Probenträgers eine Leiterplatte angeordnet ist, die Leiterbahnen aufweist, die von den Kontakten jedes einzelnen Probenhalters zur Mittelachse des Probenträgers führen. Die Leiterplatte ist dabei gegenüber dem Probenträger fixiert und macht dadurch etwaige Drehbewegungen des Probenträgers bei der Positionierung eines Probenhalters im Strahlengang einer Röntgen-, Synchrotron oder sonstigen Strahlenquelle mit. In einer besonders einfachen Ausführungsform endet die Schraube, die die Kontaktierung der Batterievorderseite herstellt, erst in einem entsprechenden Kontakt in der Leiterplatte. Dies kann vorteilhaft auch zur Fixierung der Leiterplatte genutzt werden. Weiterhin bevorzugt wird auch die Kontaktierung des Rückseitenkontaktes der Batterie durch eine Schraube realisiert, die ebenfalls zu der entsprechenden Kontaktbahn der Leiterplatte führt und auch die Aufgabe der mechanischen Halterung der Leiterplatte mit übernehmen kann. Dem Fachmann ist bekannt, dass mechanische Distanzstücke nach Bedarf eingesetzt werden können, um einen Abstand zwischen Rückseite des Probenträgers und Leiterplatte zu realisieren. Die Leiterplatte besteht bevorzugt aus dem für derartige Bauteile üblichen Material, bspw. FR4 oder Polyimid.

In einer bevorzugten Ausführungsform weist auch die Leiterplatte eine Öffnung für den Strahldurchtritt auf.

Alternativ sind auch Einzelleitungen oder Zweidrahtleitungen von den Kontakten jedes Probenhalters zu einer Sammelschiene bzw. einem Stecker bei der Mittelachse des Probenträgers möglich.

In einer bevorzugten Ausführungsform führen die Leitungen von jedem einzelnen Probenhalter zu einer Steckverbindung, bspw. einem Molexstecker, von wo aus sie als Bündel von Einzelleitungen oder als Flachband- oder Rundkabel mit einer Vielzahl von Leitungen weggeführt werden. Die Leitungen können dann je nach Messaufgabe elektrisch versorgt und/oder an Messgeräte angeschlossen werden.

Durch die zusammengefasste Führung aller Kabel der verschiedenen Probenhalter ist es sehr viel einfacher möglich, den Kabelverlauf zu kontrollieren und aus dem Strahlengang heraus zu halten. Der Abstand des Abganges der zusammengefassten Kabel von der Mittelachse ist möglichst gering und sollte bevorzugt nicht mehr als 50%, besonders bevorzugt nicht mehr als 33% und ganz besonders bevorzugt nicht mehr als 25% des Radius des Probenträgers von der Mittelachse entfernt sein.

In einer weiteren bevorzugten Ausführungsform sind die Probenträger mit Elementen zur Beheizung oder Kühlung der Batterien ausgestattet (temperaturabhängige Messungen von Batteriematerialien). Vorzugsweise handelt es sich dabei um Peltierelemente, die in den Vertiefungen angeordnet sind. Die Stromversorgung dieser Elemente erfolgt bevorzugt ebenfalls über die gemeinsame Steckverbindung oder eine weitere, ebenfalls in der Nähe der Mittelachse des Probenträgers angeordnete Verbindung. In einer bevorzugten Ausführungsform sind diese Elemente zur Beheizung oder Kühlung der Batterien, ähnlich zu dem vorstehend beschriebenen Adapter für Batterien, die einen kleineren Durchmesser als die Vertiefungen aufweisen, ausgestaltet. Sie liegen somit als Ring um die Batterien herum und temperieren diese. Eine weitere Ausführungsform sieht die Elemente als Scheibe mit Mittelloch vor, die zwischen Batterieboden und Schraubenfeder angeordnet sind. Hierbei sind die Elemente mit einer leitfähigen, gegen die Elemente selbst elektrisch isolierten Umhüllung umgeben, die gewährleistet, dass eine elektrische Verbindung zwischen dem Boden der Batterie und der Schraubenfeder hergestellt wird. In einer besonders einfachen Ausführungsform sind Heizelemente vorgesehen, die auf dem Prinzip der elektrischen Widerstandsheizung basieren.

Bevorzugt ist der erfindungsgemäße Probenträger an einer Haltevorrichtung angeordnet. Diese bietet optional Verstellmöglichkeiten, so dass der Probenhalter der in Bearbeitung befindlichen Probe nach Bedarf ausgerichtet werden kann. Dies ist vorzugsweise in alle drei Raumrichtungen möglich. Es sind aber auch Höhen- oder Seitenverstellung gemeinsam oder einzeln bevorzugt möglich.

In einer besonders bevorzugten Ausführungsform ist es möglich, die Ausrichtung der Mittelachse zu verändern; besonders bevorzugt aus einer horizontalen Ausrichtung in eine vertikale (und Zwischenwerte). So kann die erfindungsgemäße Vorrichtung nicht nur an die Strahlrichtung angepasst, sondern auch von der Transmissionsdiffraktometrie zur Reflexionsdiffraktometrie gewechselt werden.

Die erfindungsgemäße Vorrichtung ist nicht nur für Messungen zur Pulverdiffraktion in Reflexion- oder Transmissionsanordnung (inkl. PDF-Messungen) geeignet, sondern kann auch, vorzugsweise an Synchrotroneinrichtungen, für Röntgenabsorptionsmessungen, Neutronenbeugungsexperimente, 3D-Tomografie oder Mößbauer-/Gammastrahlspektroskopie eingesetzt werden. Beim Vorhandensein geeigneter Heiz- oder Kühlanordnungen können auch temperaturabhängige Messungen durchgeführt werden. Bevorzugt ist hier ein Bereich innerhalb der üblichen Einsatzgrenzen zwischen -60°C und 100°C.

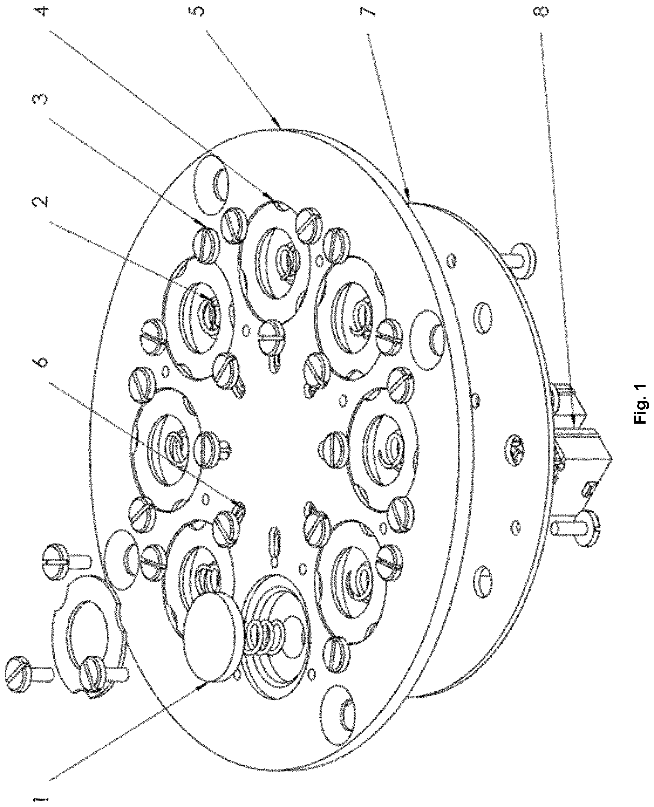

Fig. 1 zeigt schematisch den erfindungsgemäßen Probenträger 5 in 3D-Darstellung.

Fig. 2 stellt den erfindungsgemäßen Probenträger 5 in der Draufsicht mit der im Falle der Transmissionsanordnung dem Primärstrahl abgewandten Seite (Vorderseite), also in Beugungsrichtung (im Falle von Synchrotronstrahlung auch "Downstream-Bereich" genannt) dar. Insbesondere wird so die Mittelachse 55 illustriert, die sich senkrecht durch die Zeichenebene durch den Mittelpunkt des kreisförmigen Probenträgers 5 erstreckt.

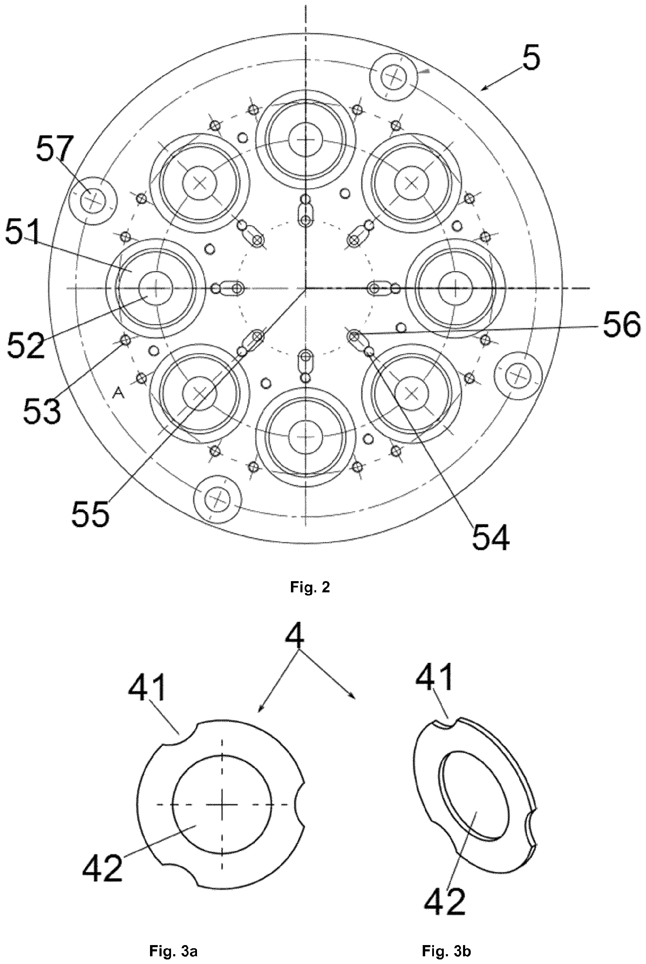

Die Figuren Fig. 3a und Fig. 3b zeigen schematisch den Deckel 4 der Vertiefung 51 eines Probenhalters in der Draufsicht (3a) und in der 3D-Ansicht.

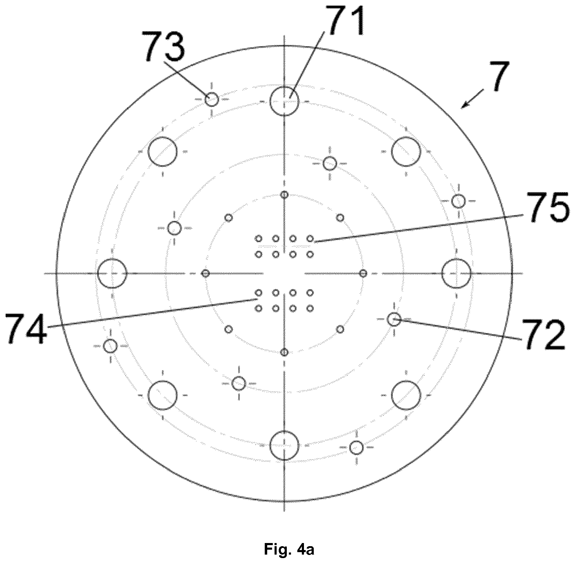

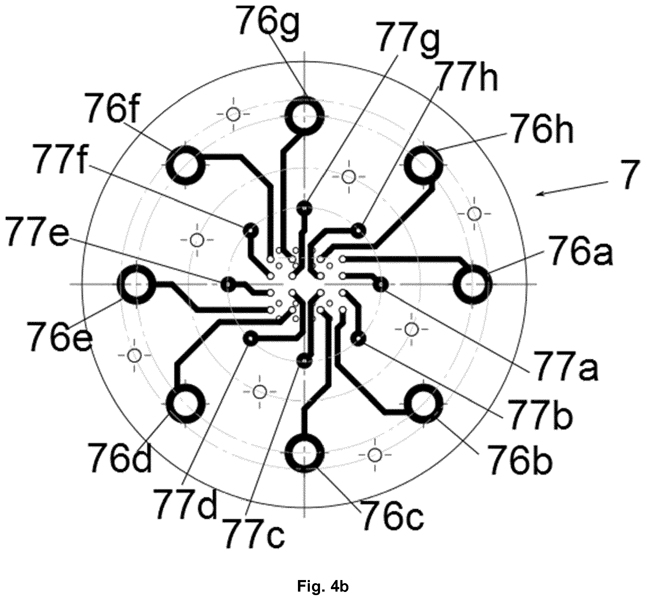

Die Figuren Fig. 4a und Fig. 4b zeigen schematisch die Leiterplatte 7 in Rückansicht (Fig. 4a) und in Vorderansicht (Fig. 4b), wobei die Vorderansicht die dem Probenträger 5 zugewandte Seite darstellt und die Leiterbahnen abbildet.

### Ausführungsbeispiel

Das folgende Ausführungsbeispiel erläutert die Erfindung beispielhaft, ohne diese jedoch auf die beispielhafte Ausgestaltung zu beschränken.

Der Probenträger 5 besteht aus Kunststoff und ist kreisförmig ausgeführt. Der Durchmesser des Probenträgers 5 beträgt 144 mm. Der Probenträger 5 ist aus Polyoxymethylen gefertigt. Die Materialdicke beträgt 11 mm. Um die Mittelachse 55 herum sind im Abstand von 42 mm acht zylindrische Vertiefungen 51 als Probenhalter mit einem Innendurchmesser von 28 mm, die sich nach 1,4 mm auf 20,6 mm reduzieren, angeordnet. Durch die Reduktion der Innendurchmesser werden Absätze ausgebildet, auf denen die Deckel 4 aufliegen können. Die Strahleintrittsöffnung 52 im Boden der Vertiefung 51 hat einen Durchmesser von 9,5 mm. Um jede Vertiefung 51 herum sind drei Schraubenöffnungen (53, 54) angeordnet, wobei die, der Mittelachse 55 nächstgelegenen Schrauben, die in die Schraubenöffnung 54 eingreifen, mittels einer Durchkontaktierung (6) elektrisch leitend mit der Rückseite und der dort angeordneten Leiterplatte 7 verbunden sind. Die Deckel 4 bestehen aus Edelstahl und weisen eine Strahleintrittsöffnung 42 mit einem Durchmesser von 16 mm auf. Sie können in der jeweiligen Vertiefung 51 arretiert werden, indem die Aussparungen 41 so gedreht werden, dass sie mit den Schraubenköpfen der Schrauben in den Schraubenöffnungen 53, 54 deckungsgleich sind und der Deckel 4 somit an ihnen vorbei, in die Vertiefung 51 geführt werden kann. Dort drückt er die Batterie 1, die durch die Schraubenfeder 2 angehoben ist, in die Vertiefung 51 hinein. Nach dem Verdrehen des Deckels 4 um ca. 60° liegen die Aussparungen 41 jeweils zwischen den Schraubenköpfen der Schrauben in den Schraubenöffnungen 53, 54 und der Deckel 4 ist hinter den Schraubenköpfen der Schrauben in den Schraubenöffnungen 53, 54 verschränkt. Die Batterie 1 wird durch die Schraubenfeder 2 gegen den Deckel gedrückt und seitlich von der Wandung der Vertiefung 51 geführt. So befindet sich die Batterie 1 stets in einer definierten, stabilen Position im Probenträger 5. Die Schraubenfeder 2 tritt durch das Strahleintrittsloch 52 im Boden der Vertiefung 51 aus, stützt sich auf der Leiterplatte 7 ab und kontaktiert dort entsprechende Kontaktstellen 76a-76h. Diese stellen eine leitende Verbindung zu einem, der bei der Mittelachse 55 angeordneten Steckverbinder 8 her. Die Leiterplatte 7 ist starr mit dem Probenträger 5 verbunden, so dass diese auch der Drehbewegung des Probenträgers 5 folgt. Von der Vorderseite des Probenträgers gelangen die Kontaktkabel 6 durch die Durchführung 56 des Kontaktes von der Schraube 54 zur Rückseite des Probenträgers 5. Diese Kontaktkabel 6 stellen die elektrisch leitende Verbindung zwischen Deckel 4 und Leiterplatte 7 her. Die Kabel 6 sind dazu mit den zugehörigen Kontaktstellen 77a-77h verbunden, von denen aus ebenfalls Leiterbahnen zu einem der bei der Mittelachse 55 angeordneten Steckverbinder 8 führen. Über den Steckverbinder 8 wird vorteilhaft ein mehradriges Kabel oder ein Leitungsbündel angeschlossen. Dieses kann aufgrund seiner Flexibilität Drehbewegungen des Probenrades tolerieren, ohne beschädigt oder aus der Steckverbindung herausgerissen zu werden. Der Fachmann erkennt, dass dies jedoch nur begrenzt möglich ist und vorzugsweise eine Rotation in eine Drehrichtung im nächsten Schritt durch eine Drehung in die andere Richtung zumindest teilweise kompensiert werden sollte (+/- 180°).

### Bezugszeichenliste

- 1: Batterie (Knopfzelle)
- 2: Schraubenfeder
- 3: Schraube zur Deckelhalterung
- 4: Deckel
- 41: Aussparungen
- 42: Strahleintrittsöffnung
- 5: Probenträger
- 51: Vertiefung zur Batterieaufnahme
- 52: Öffnung zum Strahlaustritt im Boden der Vertiefung
- 53: Öffnung für Schraube zur Befestigung des Deckels
- 54: Öffnung für Schraube zur Befestigung des Deckels mit Kontakt
- 55: Mittelachse des Probenträgers (senkrecht zur Zeichenebene)
- 56: Durchführung des Kontaktes von der Schraube zur Rückseite des Probenträgers
- 57: Schraubenloch zur Befestigung des Probenträgers
- 6: Kabel als leitfähige Verbindung zur Rückseite des Probenträgers
- 7: Leiterplatte
- 71: Strahlaustrittsöffnung in der Leiterplatte
- 72, 73: Öffnungen für Befestigungsschrauben der Leiterplatte
- 74, 75: Lötöffnungen für Steckverbinder in der Nähe der Mittelachse
- 76a-h: Kontaktstellen der Schraubenfedern
- 77a-h: Kontaktstellen der Kabel der leitfähigen Verbindungen von der Vorderseite (Deckel)
- 8: Stecker (bspw. Molex-Stecker)

### Zitierte Nichtpatentliteratur

"Advances in in situ powder diffraction of battery materials: a case study of the new beamline P02.1 at DESY, Hamburg", M. Herklotz et al. Journal of Applied Crystallography, (2013). 46. P. 1117-1127

Webseite Anton Paar (http://www.anton-paar.com/?eID=documentsDownload&document= 2065&L=8), Stand 18. Juni 2014, "Multi-sample Chamber for In-situ Transmission XRD under Controlled Humidity" aus Online-Produktbroschüre: "Sample Stages for Non-ambient X-ray Diffraction"

## Patentansprüche

1. Vorrichtung zur *in situ* Analyse von Batterien (1) mittels Röntgen-,Synchrotron- oder einer anderen Strahlung, aufweisend einen Probenträger (5), der als um die Mittelachse (55) drehbar gelagertes Probenrad ausgeführt ist, das mehrere Probenhalter aufweist, deren Mittelpunkte auf einer gemeinsamen Kreislinie um den Mittelpunkt des Probenträgers (5) angeordnet sind, wobei jeder Probenhalter einzeln mit einem arretierbaren Deckel (4) wiederholt geöffnet und verschlossen werden kann, und der Probenhalter in seinem Inneren einen Hohlraum aufweist, der die zu untersuchende Batterie (1) im Umfang formideal aufnimmt, wobei Deckel (4) und Hohlraum eine unverschlossene oder abgedeckte Öffnung für den Strahldurchtritt aufweisen und eine im Randbereich der Batterie (1) angreifende Feder (2) die Batterie (1) gegen den Deckel (4) presst, wobei die Feder (2) und der Randbereich des Deckels (4) elektrisch leitend, jedoch isoliert gegeneinander, ausgeführt sind, **dadurch gekennzeichnet, dass** von jedem Probenhalter eine elektrisch leitfähige Verbindung (6) vom Randbereich des Deckels (4) und eine elektrisch leitfähige Verbindung mittels der Feder (2) auf die dem Deckel (4) abgewandte Seite des Probenträgers (5) und von dort in die Nähe des Mittelpunktes des Probenträgers (5) geführt sind und die Leitungen aller Probenhalter dort zu einem Leitungsbündel oder einer Steckverbindung (8) zusammengefasst sind.

2. Vorrichtung nach Anspruch 1, **dadurch gekennzeichnet, dass** die elektrisch leitfähigen Verbindungen von der Batterie (1) über die Feder (2) und von der Batterie (1) über den Deckel (4) auf der dem Deckel (4) abgewandten Seite des Probenträgers (5) über Kontaktstellen (76, 77) auf einer Leiterplatte (7) kontaktiert und in der Nähe der Mittelachse (55) zusammengeführt sind.

3. Vorrichtung nach Anspruch 2, **dadurch gekennzeichnet, dass** die Feder (2) eine Spiralfeder ist und durch das Strahlaustrittsloch im Boden des Probenhalters (5) austritt und sich auf der Leiterplatte (7) abstützt und geeignet ist, eine elektrisch leitfähige Verbindung zwischen der Rückseite der Batterie (1) im Probenhalter und einer Kontaktstelle 76) auf der Leiterplatte (7) herzustellen.

4. Vorrichtung nach einem der vorhergehenden Ansprüche, **dadurch gekennzeichnet, dass** das Probenrad derart manuell oder mittels Antrieb drehbar angeordnet ist, dass ein Probenhalter in den Strahlengang einer Röntgen-, Synchrotron- oder anderen Strahlungsquelle eingebracht werden kann.

5. Vorrichtung nach Anspruch 4, **dadurch gekennzeichnet, dass** die Vorrichtung in einer Tragevorrichtung angeordnet ist, durch die die Position des Probenrades so verändert werden kann, dass die Position des Probenhalters im Strahlengang in einer oder mehreren der drei Raumrichtungen verändert und/oder die Neigung der Mittelachse zur Achse des Strahlenganges verändert werden kann.

## Claims

1. A device for the in situ analysis of batteries (1) by means of X-ray, synchrotron or another radiation, having a sample support (5), which is embodied as a sample wheel rotatably mounted about the centre axis (55), which sample wheel has a plurality of sample holders, the centre points of which are arranged on a common circular line around the centre point of the sample support (5), wherein each sample holder can be repeatedly opened and closed individually by an arrestable cover (4), and the sample holder has in its interior a cavity which receives the battery (1), which is to be examined, in a manner ideal in shape with regard to circumference, wherein the cover (4) and the cavity have an unclosed or covered opening for the passage of the beam, and a spring (2), engaging in the edge region of the battery (1), presses the battery (1) against the cover (4), wherein the spring (2) and the edge region of the cover (4) are embodied so as to be electrically conducting but insulated with respect to one another, **characterized in that** there are directed from each sample holder an electrically conductive connection (6) from the edge region of the cover (4), and an electrically conductive connection by means of the spring (2) onto the face of the sample support (5) facing away from the cover (4) and from there into the vicinity of the centre point of the sample support (5), and the lines of all sample holders are combined there to form a line bundle or a plug connector (8).

2. The device according to claim 1, **characterized in that** the electrically conductive connections from the battery (1) via the spring (1) and from the battery (2) via the cover (4) on the face of the sample support (5) facing away from the cover (4) are contacted via contact points (76, 77) on a conductor board (7) and are brought together in the vicinity of the centre axis (55).

3. The device according to claim 2, **characterized in that** the spring (2) is a spiral spring and emerges through the beam exit hole in the base of the sample holder (5) and rests on the conductor board (7) and is suitable to produce an electrically conductive connection between the rear face of the battery (1) in the sample holder and a contact point (76) on the conductor board (7).

4. The device according to one of the preceding claims, **characterized in that** the sample wheel is arranged so as to be rotatable manually or by means of a drive such that a sample holder can be introduced into the path of rays of an X-ray, synchrotron or other radiation source.

5. The device according to claim 4, **characterized in that** the device is arranged in a supporting device, through which the position of the sample wheel can be altered so that the position of the sample holder in the path of rays can be altered in one or more of the three spatial directions and/or the inclination of the centre axis to the axis of the path of rays can be altered.

## Revendications

1. Dispositif pour l'analyse *in situ* de batteries (1) à l'aide de rayons X, de rayons de synchrotron ou d'un autre rayonnement, présentant un porte-échantillons (5) qui est réalisé en tant que roue d'échantillons positionnée de manière mobile autour de l'axe central (55), qui présente plusieurs supports d'échantillons dont les points centraux sont agencés sur une ligne circulaire commune autour du point central du porte-échantillons (5), dans lequel chaque support d'échantillon individuel peut être ouvert et fermé de manière répétée avec un couvercle verrouillable (4), et le support d'échantillons présente une cavité dans son intérieur, qui accueille dans une forme idéale les dimensions de la batterie (1) à examiner, dans lequel le couvercle (4) et la cavité présentent une ouverture non fermée ou recouverte pour la traversée du rayonnement et un ressort (2) agissant sur la zone de bordure de la batterie (1) presse la batterie (1) contre le couvercle (4), dans lequel le ressort (2) et la zone de bordure du couvercle (4) sont réalisés pour être conducteurs électriquement, mais isolés l'un par rapport à l'autre, **caractérisé en ce que** par chaque support d'échantillons une connexion conductrice électriquement (6) de la zone de bordure du couvercle (4) et une connexion conductrice électriquement soient conduites à l'aide du ressort (2) sur le côté du porte-échantillons (5) écarté du couvercle (4), et de là soient conduites à proximité du point central du porte-échantillons (5) et les câbles de tous les porte-échantillons sont regroupés là en un faisceau de câbles ou en une fiche de raccordement (8).

2. Dispositif selon la revendication 1, **caractérisé en ce que** les connexions conductrices électriquement sont rassemblés de la batterie (1) via le ressort (2) et de la batterie (1) via le couvercle (4) sur le côté du porte-échantillons (5) écarté du couvercle (4) via des points de contact (76, 77) mis en contact sur un circuit imprimé (7) et sont rassemblés à proximité de l'axe central (55).

3. Dispositif selon la revendication 2, **caractérisé en ce que** le ressort (2) est un ressort hélicoïdal et sort par le trou de sortie du faisceau dans le corps du support d'échantillon (5) et s'appuie sur le circuit imprimé (7) et convient pour établir une connexion conductrice électriquement entre l'envers de la batterie (1) dans le support d'échantillon et un point de contact (76) sur le circuit imprimé (7).

4. Dispositif selon l'une quelconque des revendications précédentes, **caractérisé en ce que** la roue d'échantillons est agencée de manière rotative manuellement ou à l'aide d'un entraînement de sorte qu'un support d'échantillons peut être engagé dans la trajectoire de faisceau d'une source de rayons X, de rayons de synchrotron ou d'une autre source de rayonnement.

5. Dispositif selon la revendication 4, **caractérisé en ce que** le dispositif est agencé dans un dispositif porteur, par lequel la position de la roue d'échantillons peut être modifiée afin que la position du porte-échantillon dans la trajectoire de faisceau puisse être modifiée dans une ou plusieurs des trois directions spatiales et/ou l'inclinaison de l'axe central puisse être modifiée par rapport à l'axe de la trajectoire du faisceau.
